# EUROPEAN PATENT SPECIFICATION

(11) **EP 2 901 323 B1**
(45) Date of publication and mention of the grant of the patent: **29.07.2020**
(21) Application number: 13776657.2
(22) Date of filing: 27.09.2013
(51) Int. Cl.: G06F 16/21

(54) **POLICY DRIVEN DATA PLACEMENT AND INFORMATION LIFECYCLE MANAGEMENT**
RICHTLINIENGESTEUERTEN DATENPLATZIERUNG UND LEBENSZYKLUSVERWALTUNG VON INFORMATIONEN
PLACEMENT DES DONNÉES ET GESTION DU CYCLE DE VIE D'INFORMATIONS PRÉDÉTERMINÉS PAR POLITIQUES

(30) Priority: 28.09.2012 US 201261707685 P; 14.03.2013 US 201313804394; 14.03.2013 US 201313804581; 14.03.2013 US 201313826075
(43) Date of publication of application: 05.08.2015
(73) Proprietor: Oracle International Corporation, Redwood Shores, CA 94065 (US)
(72) Inventor: MARWAH, Vineet, San Ramon, CA 94582 (US); LAKSHMANAN, Hariharan, Redwood Shores, CA 94065 (US); MYLAVARAPU, Ajit, Redwood Shores, CA 94065 (US); GAHARWAR, Prashant, Redwood Shores, CA 94065 (US); GANESH, Amit, San Jose, CA 95129 (US)
(74) Representative: Dendorfer, Claus
(86) International application number: PCT/US2013/062451
(87) International publication number: WO 2014/052917

(56) References cited:
- US-A1- 2003 225 801
- US-A1- 2005 149 584
- US-A1- 2009 198 729
- US-A1- 2010 274 827
- US-A1- 2011 082 842
- US-A1- 2012 185 648
- JIN REN ET AL: "A New Buffer Cache Design Exploiting Both Temporal and Content Localities", DISTRIBUTED COMPUTING SYSTEMS (ICDCS), 2010 IEEE 30TH INTERNATIONAL CONFERENCE ON, IEEE, PISCATAWAY, NJ, USA, 21 June 2010 (2010-06-21), pages 273-282, XP031727182, ISBN: 978-1-4244-7261-1
- BAIRD R ET AL: "Distributed Information Storage Architecture", MASS STORAGE SYSTEMS, 1993. PUTTING ALL THAT DATA TO WORK. PROCEEDINGS ., TWELFTH IEEE SYMPOSIUM ON MONTEREY, CA, USA 26-29 APRIL 1993, LOS ALAMITOS, CA, USA,IEEE COMPUT. SOC, US, 26 April 1993 (1993-04-26), pages 145-155, XP010095431, DOI: 10.1109/MASS.1993.289766 ISBN: 978-0-8186-3460-4
- Adi Hirschtein ET AL: "White Paper Unlocking the Potential of Information Lifecycle Management: Usage-based Data Classification for Oracle Databases", , 15 August 2007 (2007-08-15), pages 1-20, XP055600970, Retrieved from the Internet: URL:http://www.oracle.com/us/products/data base/zettapoint-oracle-ilm-wp-133782.pdf [retrieved on 2019-07-01]
- Anonymous: "Implementing Information Lifecycle Management Using the ILM Assistant", , 16 August 2007 (2007-08-16), pages 1-42, XP055601164, Retrieved from the Internet: URL:https://www.oracle.com/webfolder/techn etwork/tutorials/obe/db/11g/r2/prod/storag e/ilm/ilm.htm [retrieved on 2019-07-01]

## Description

### FIELD OF THE INVENTION

The present disclosure relates to databases, and more specifically, to policy driven data placement and information lifecycle management.

### BACKGROUND

Data is generated and stored at ever increasing rates in organizations both governmental and corporate. While some business data almost never loses its value, the usefulness of most data tends to decline over time until it has no further value for almost any purpose. Generally, the value of business information tends to be the greatest soon after the data is created and remains active for only a short period of time, at most a few years, after which the data's importance to the business, and thus the data's general usage, begins to decline. However, many businesses are constrained by factors, such as legal mandates, requiring data to be retained long after the data's usefulness has expired.

As a result, it has been commonly observed that users access at times as little as 10%-20% of the data stored within a database. The other 80-90% of data is rarely, if ever, accessed by users and yet contributes to the bulk of the storage costs required to maintain the database. To make matters worse, as the volume of data stored by the database increases, performance becomes degraded due to slower full table scans and elongated application upgrades.

Thus, faced with rising storage costs and deteriorating system performance, businesses have sought ways to efficiently manage their database's inactive data. At present, many businesses try to achieve this goal by resorting to third party archiving solutions that offload inactive data out of the database and into archival storage. While these solutions help to ameliorate the effects of accelerated data production, businesses employing third party archiving solutions tend to replace one problem with a host of others.

As one issue, third party archiving solutions tend to lack intimate knowledge of the format and contents of the database. For instance, many third party archiving solutions only work at the level of the file system and therefore can only archive at the granularity of a file. Thus, while a third party archiving solution may be able to offload the individual files that make up the database, the third party archiving solution may not be able to selectively offload individual database elements.

Furthermore, the third party archiving solution may detect inactive data based on file level metrics, such as the frequency or recency with which files are accessed, but may be unable to detect inactivity at the granularity of an individual database element. Consequently, when a database file contains both active and inactive data, third party archiving solutions may be unable to identify and archive only the inactive data. This issue can be exacerbated by database implementations that store data as flat files, where an entire table, or even the entire database, may be contained within a single large file on the file system.

To work around the inability of third party archiving solutions to separate inactive data beyond the granularity of a file, a database administrator may instead manually separate active and inactive data objects into different database files. For example, the database administrator may explicitly move inactive data objects to a separate tablespace, which can then be offloaded to archival storage. However, this workaround introduces heavy database administration burdens, as implementing and validating the required application schema modifications is not a trivial task. For example, the database administrator may be required to discern data access patterns from redo logs and develop customized scripts to separate the inactive data. Moreover, an offline database maintenance window is usually reserved to execute the schema modifications, negatively impacting database availability.

Based on the foregoing, there is a need for an efficient way of organizing inactive data in a database while simplifying database management.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

US 2009/0198729 A1 discloses a system and method for obtaining interrelated data for a database. A data row set or "driving set" for a driving table is calculated using one or more archive policies. For example, an archive policy may state that all data that is more than four years old can be archived because such data is seldom needed. Certain restrictions ("eligibility rules") may be dictated by technical issues. For example, if a customer status is "ACTIVE", the row for this customer cannot be archived since the row is currently being used. In order to find the desired rows for archiving, the driving table is linked to a second level table to identify data rows eligible for archiving in the second level table. Additional data rows can be found in the driving table based on application relationships between the second level table and the driving table. Finally, all of the data rows that have been collected from the tables are archived.

US 2010/0274827 A1 discloses a computer program (called "data lifecycle management program") that evaluates data contained in database tables by analyzing several metrics for the data. The metrics that are used to evaluate database tables include: table purpose, data retention, disk requirements, data criticality, data relevance, and desired performance. The computer program develops a data (lifecycle) storage plan that identifies an initial storage tier where the data should be stored, and also identifies if, when, and to where the data should be moved thereafter.

US 2005/0149584 A1 discloses a federated archive RDBMS that comprises a query processor, a local database, and a data mover. The data mover may cause data to be moved from the local database to an external archive server in accordance with specified archiving rules. A rule may specify a source, a target, an archive condition, and a schedule. The archive condition comprises a set of predicates, retention periods, and indications of timestamp columns, wherein each timestamp column is a column with entries from which the retention period is to be calculated.

US 2011/0082842 A1 discloses a data storage subsystem having a plurality of data compression engines configured to compress data, each having a different compression algorithm. The data compression engines are arranged in tiers from low to high in accordance with an expected latency to compress data and to uncompress compressed data. A data compression engine is selected from a tier that is inverse to a present rate of access. Extent objects, which hold information about stored extents, are updated either periodically or at each access to data. The rate of access for data that has been accessed is determined from the information of the updated extent objects.

Adi Hirschtein ET AL: "White Paper Unlocking the Potential of Information Lifecycle Management: Usage-based Data Classification for Oracle Databases" discloses the usage of two products that provide an user interface and script generator in order to help define and manage ILM policies for database management systems by identifying database objects which are not frequently used.

### SUMMARY

The present invention is defined by the independent claims, taking due account of any element which is equivalent to an element specified in the claims. The dependent claims concern optional elements of some embodiments of the present invention.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1A is a block diagram that depicts an example database management system for policy driven data movement and information lifecycle management, according to an embodiment;
FIG. 1B is a block diagram that depicts an example declarative statement syntax to define policies for data movement and information lifecycle management in a database management system, according to an embodiment;
FIG. 1C is a block diagram that depicts example policies for data movement and information lifecycle management in a database management system, according to an embodiment;
FIG. 1D is a block diagram that depicts an example evaluation of a policy for data movement and information lifecycle management, according to an embodiment;
FIG. 1E is a block diagram that depicts an example evaluation of a policy for data movement and information lifecycle management, according to an embodiment;
FIG. 1F is a block diagram that depicts an example evaluation of policies for data movement and information lifecycle management, according to an embodiment;
FIG. 1G is a block diagram that depicts example custom policies for data movement and information lifecycle management in a database management system, according to an embodiment;
FIG. 1H is a block diagram that depicts example policies for automated information lifecycle management using low access patterns in a database management system, according to an embodiment;
FIG. 1I is a block diagram that depicts an example evaluation of a policy for automated information lifecycle management using low access patterns, according to an embodiment;
FIG. 2 is a flow diagram that depicts a process for policy driven data movement and information lifecycle management, according to an embodiment;
FIG. 3 is a block diagram of a computer system on which embodiments may be implemented.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

### GENERAL OVERVIEW

In an embodiment, a database management system ("DBMS") provides policy driven data placement and information lifecycle management. The term information lifecycle management refers to the effective management of information, such as database rows or records, throughout the various lifecycle phases of its useful life, from high relevance phases to low relevance phases, from creation to disposal. To implement information lifecycle management in a DBMS, a user or database application can specify declarative policies that define the movement and transformation of stored database objects into storage tiers according to various conditions. In some embodiments, the conditions include meeting an activity-level condition on one or more database objects, which may include inherited child objects and grouped dependent objects. The policies are associated with a database object and may also be inherited from policies on parent database objects.

A policy defines, for a database object, an archiving action to be taken, a scope, and a condition before the archiving action is triggered. Archiving actions may include compression, data movement, table clustering, and other actions to place the database object in an appropriate storage tier for a lifecycle phase of the database object, where a storage tier may represent a type of storage medium and/or the technique used to compress or store the data on the storage medium, as defined further in Database Systems below.

In some embodiments, the policy may be a custom policy, which defines, for a database object, a custom function to evaluate on an associated database object to determine whether an archiving action is triggered. The custom function is user-defined and registered into a database, and can flexibly include any customized logic using data information sources internal and external to the database, including database access statistics such as block level heatmaps, segment level heatmaps, and higher level heatmaps, as more fully described in the patent titled "Tracking Row and Object Database Activity into Block Level Heatmaps". The access statistics may be exposed via an application programming interface (API).

The scope may be defined to be the segment, group, or row.

The condition may specify the database object meeting a minimum period of inactivity, which may be based on access statistics derived from a segment level or block level heatmap of the database, as more fully described in the patent titled "Tracking Row and Object Database Activity into Block Level Heatmaps".

The condition may also specify the database object meeting an activity-level condition, such as a low access pattern or low access level. Optionally, the activity-level condition may also be specified for a minimum time period. A determination of whether the activity-level condition is satisfied may utilize one or more criteria, including access statistics of the database object such as a number of individual row accesses, a number of full table scans, a number of data manipulation language (DML) statements, and a number of index lookups. The access statistics may be derived from a segment level or block level heatmap of the database, as more fully described in the patent titled "Tracking Row and Object Database Activity into Block Level Heatmaps". The one or more criteria may include one or more costs of changing a current compression level of the database object to a target compression level specified by the archiving action. Accordingly, the policies can provide data optimizations that consider the access characteristics, advantages, and disadvantages for each possible storage tier of the database object.

The policies may be evaluated on an adjustable periodic basis, where an associated archiving action is performed for each database object meeting the activity-level condition. The archiving actions may be queued as tasks for processing by a resource aware task scheduler, allowing the tasks to be carried out automatically in the background with minimal overhead and database performance impact. Thus, policies may be used to defer compression and other high overhead actions to the background. Actions for the same database object may also be consolidated where possible for greater efficiency.

Since policy evaluation occurs in the background without any user intervention, management and administration tasks are limited to an initial definition of the policies. By defining policies on a tablespace or table and utilizing policy inheritance, the policies can also be automatically associated with future database objects without any user intervention. Custom functions may be optionally defined to integrate any business logic as desired by the database user, allowing policies can be tailored according to specific business needs and integrating logic and data information sources external to the database. In some embodiments, the database management system can determine the access costs to the database object by using knowledge concerning the advantages and disadvantages of each storage tier for each type of data access, thereby making data optimization actions occur automatically without requiring the user to understand and set detailed parameters for the optimizations. Archiving actions may be specified down to the row scope, allowing inactive data to be optimized at the finest granularity level of rows. Accordingly, a database management system can implement policy driven data movement and information lifecycle management with fine grained optimizations while maintaining high performance and low maintenance.

### DATABASE SYSTEMS

Embodiments of the present invention are used in the context of DBMSs. Therefore, a description of a DBMS is useful.

A DBMS manages a database. A DBMS may comprise one or more database servers. A database comprises database data and a database dictionary that are stored on a persistent memory mechanism, such as a set of hard disks. Database data may be stored in one or more data containers. Each container contains records. The data within each record is organized into one or more fields. In relational DBMSs, the data containers are referred to as tables, the records are referred to as rows, and the fields are referred to as columns. In object-oriented databases, the data containers are referred to as object classes, the records are referred to as objects, also referred to herein as object records, and the fields are referred to as attributes. Other database architectures may use other terminology.

A database dictionary, also referred to herein as a data dictionary, comprises metadata that defines database objects physically or logically contained in a database. In effect, a database dictionary defines the totality of a database. Database objects include tables, indexes, views, columns, data types, users, user privileges, and storage structures, such as tablespaces, which are used for storing database object data.

A tablespace is a database storage unit that groups related logical structures together, and contains one or more physical data files. These logical structures may include segments, or an allocation of space for a specific database object such as a table, a table cluster, or an index. A segment may be contained in one data file or may span across multiple data files. A segment may be defined using a set of extents, where an extent contains one or more contiguous database blocks.

A database block, also referred to as a data block, is a unit of persistent storage. A database block is used by a database server to store database records (e.g. to store rows of a table, to store column values of a column). When records are read from persistent storage, a database block containing the record is copied into a database block buffer in volatile memory of a database server. A database block usually contains multiple rows, and control and formatting information, (e.g. offsets to sequences of bytes representing rows or other data structures, list of transactions affecting a row).

A database block is referred to as being atomic because, at least in part, a database block is the smallest unit of database data a database server may request from a persistent storage device. For example, when a database server seeks a row that is stored in a database block, the database server may only read the row from persistent storage by reading in the entire database block.

A database object such as a tablespace or a segment may be assigned to a particular storage tier. A storage tier denotes a particular balance between access speed and storage cost. Each storage tier may represent a different type or quality of storage medium. In general, as the access speed of a storage medium increases the price to purchase that storage medium tends to increase as well. As a result, many businesses have a limited amount of premium storage space with the fastest access speed and a much larger amount of secondary or tertiary storage space which is slower, but cheaper to purchase in bulk. Thus, in order to maximize the performance of a DBMS, data with higher operational relevance can be placed on faster storage mediums, such as top-quality disk drives, while data with lesser operational relevance can be placed on slower storage mediums, such as optical disks or tape drives.

Each storage tier may also represent a storage area where the data is compressed using a different technique. Similar to the choice of storage medium, each compression technique also represents a tradeoff, in this case between access speed and storage space. More specifically, compression techniques that achieve higher compression ratios also tend to take longer to decompress when accessing the data. Thus, in order to maximize the performance of a database management system, data with higher operational relevance can be stored uncompressed to allow faster access, while data with lower operational relevance can be compressed to save space. Storage tiers may represent a combination of both storage medium and the technique used to compress or store data on the storage medium.

Users interact with a database server of a DBMS by submitting to the database server commands that cause the database server to perform operations on data stored in a database. A user may be one or more applications running on a client computer that interact with a database server. Multiple users may also be referred to herein collectively as a user.

A database command may be in the form of a database statement that conforms to a syntax of a database language. One example language for expressing database commands is the Structured Query Language (SQL). SQL data definition language ("DDL") instructions are issued to a DBMS to define database structures such as tables, views, or complex data types. For instance, CREATE, ALTER, DROP, and RENAME, are common examples of DDL instructions found in some SQL implementations. SQL data manipulation language ("DML") instructions are issued to a DBMS to manage data stored within a database structure. For instance, SELECT, INSERT, UPDATE, and DELETE are common examples of DML instructions found in some SQL implementations. SQL/XML is a common extension of SQL used when manipulating XML data in an object-relational database.

Although the examples described above are based on Oracle's SQL, the techniques provided herein are not limited to Oracle's SQL, to any proprietary form of SQL, to any standardized version or form of SQL (ANSI standard),or to any particular form of database command or database language. Furthermore, for the purpose of simplifying the explanations contained herein, database commands or other forms of computer instructions may be described as performing an action, such as creating tables, modifying data, and setting session parameters. However, it should be understood that the command itself performs no actions, but rather the DBMS, upon executing the command, performs the corresponding actions. Thus, such statements as used herein, are intended to be shorthand for commands, that when executed by the DBMS, cause the DBMS to perform the corresponding actions.

In most cases, a DBMS executes database commands as one or more transactions, sets of indivisible operations performed on a database. Thus, after executing a given transaction, the database is left in a state where all the transaction's operations have been performed or none of the transaction's operations have been performed. While implementations may differ, most transactions are performed by, 1) beginning the transaction, 2) executing one or more data manipulations or queries, 3) committing the transaction if no errors occurred during execution, and 4) rolling back the transaction if errors occurred during execution. Consequently, a DBMS may maintain logs keeping track of committed and/or uncommitted changes to the database. For example, in some implementations of SQL, executing database commands adds records to REDO and UNDO logs, which can be used to implement rollback, database recovery mechanisms, and features such as flashback queries.

A multi-node database management system is made up of interconnected nodes that share access to the same database. Typically, the nodes are interconnected via a network and share access, in varying degrees, to shared storage, e.g. shared access to a set of disk drives and database blocks stored thereon. The nodes in a multi-node database system may be in the form of a group of computers (e.g. work stations, personal computers) that are interconnected via a network. Alternately, the nodes may be the nodes of a grid, which is composed of nodes in the form of server blades interconnected with other server blades on a rack.

Each node in a multi-node database system hosts a database server. A server, such as a database server, is a combination of integrated software components and an allocation of computational resources, such as memory, a node, and processes on the node for executing the integrated software components on a processor, the combination of the software and computational resources being dedicated to performing a particular function on behalf of one or more clients.

Resources from multiple nodes in a multi-node database system can be allocated to running a particular database server's software. Each combination of the software and allocation of resources from a node is a server that is referred to herein as a "server instance" or "instance". A database server may comprise multiple database instances, some or all of which are running on separate computers, including separate server blades.

### SYSTEM OVERVIEW

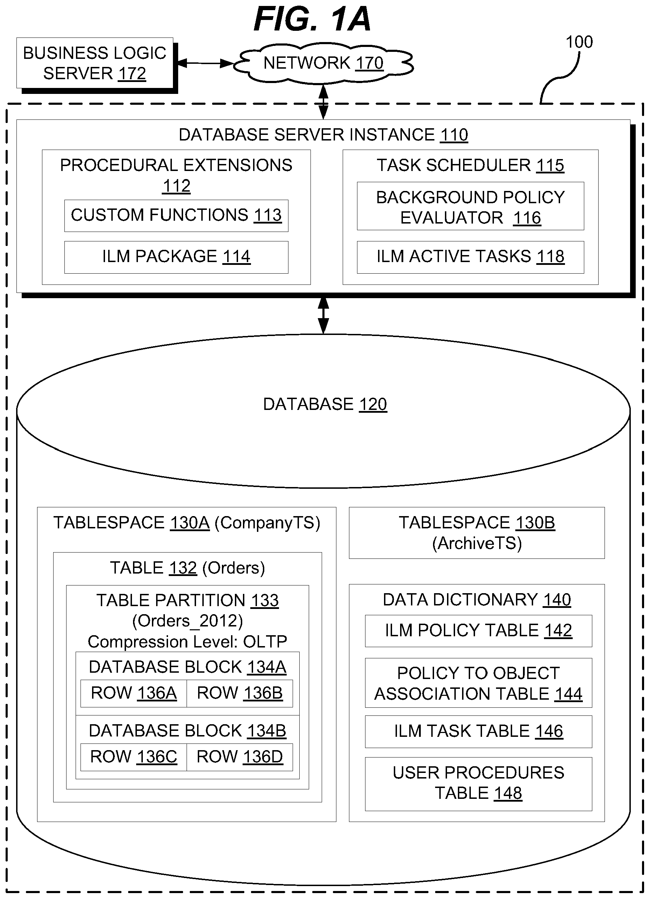

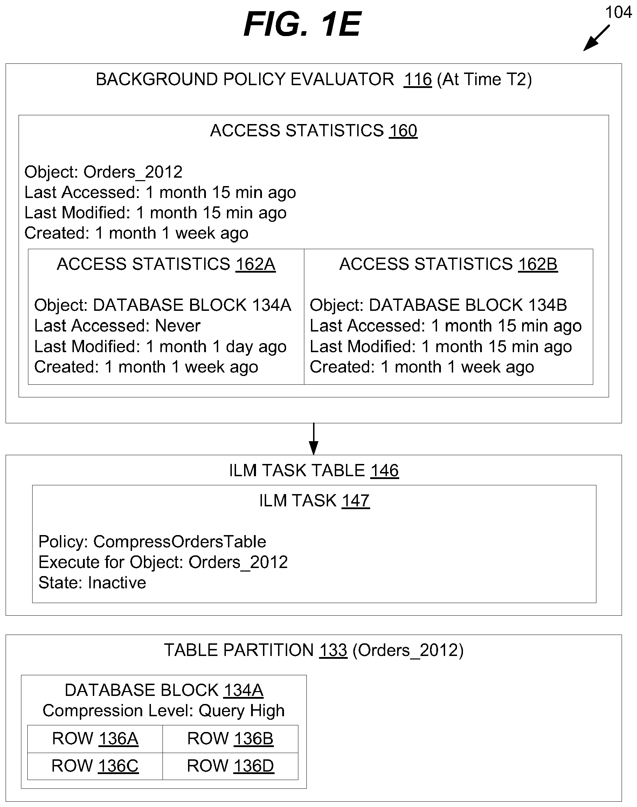

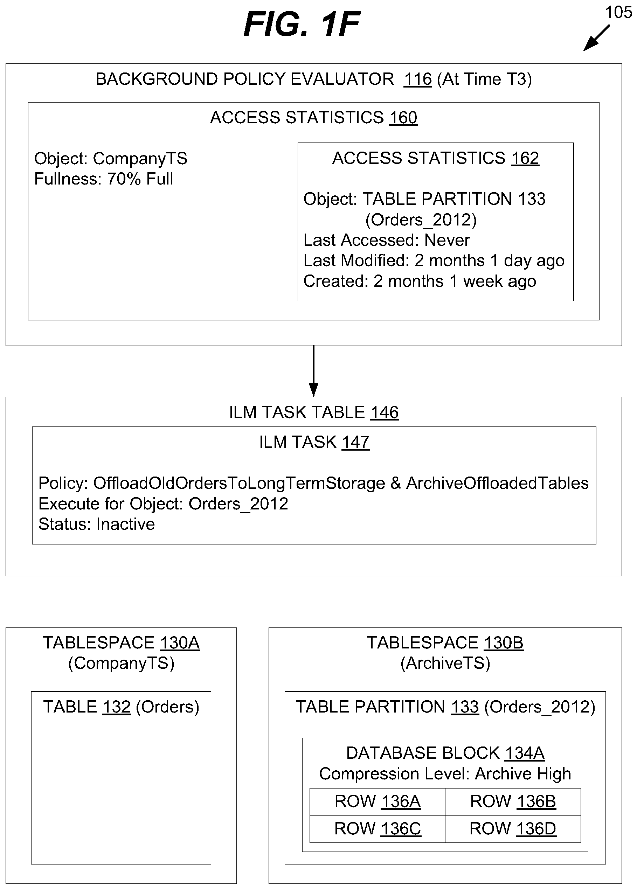

FIG. 1A is a block diagram that depicts an example database management system 100 for policy driven data movement and information lifecycle management, according to an embodiment. FIG. 1A includes database management system 100, network 170, and business logic server 172. Database management system 100 includes database server instance 110 and database 120. Database server instance 110 includes procedural extensions 112 and task scheduler 115. Procedural extensions 112 include custom functions 113 and information lifecycle management (ILM) package 114. Task scheduler 115 includes background policy evaluator 116 and ILM active tasks 118. Database 120 includes tablespace 130A, tablespace 130B, and data dictionary 140. Tablespace 130A includes table 132. Table 132 includes table partition 133. Table partition 133 includes database block 134A and database block 134B. Database block 134A includes row 136A and row 136B. Database block 134B includes row 136C and row 136D. Data dictionary 140 includes ILM policy table 142, policy to object association table 144, ILM task table 146, and user procedures table 148.

While database management system 100 only shows a single database server instance 110, embodiments may include multiple database server instances supported by one or more nodes. Thus, database management system 100 may be a multi-node database system. Further, while database 120 is shown as stored on a single storage element, database 120 may be supported by any type of underlying storage volume such as tiered storage and disk arrays across multiple local and/or networked physical disks. For example, tablespace 130A may be stored on a high cost, high performance array of solid state disks, whereas tablespace 130B may be stored on a low cost array of hard disk drives. The storage volumes may be interfaced using an automatic storage manager, a logical volume manager, a clustered file system, or another storage layer.

Database server instance 110 is a server instance of database 120. ILM policies for database 120 can be defined through the use of new ILM statements issued to database server instance 110. Database server instance 110 may also support procedural commands via procedural extensions 112, for example by supporting Procedural Language/Structured Query Language (PL/SQL). Accordingly, ILM package 114 may also be provided, allowing database users and applications to perform advanced management and customization of ILM policies.

In some embodiments, the ILM policies may be hardcoded. In other embodiments, the ILM policies may be defined in a configuration file, which may be provided by database management system 100. In this manner, database management system 100 can provide an automated ILM configuration without requiring the user to specifically state the individual policy components. For example, database management system 100 may analyze available tablespaces, compression levels, user data, and activity patterns, and based on this, formulate a comprehensive ILM plan and the policy data to implement the ILM plan.

Custom functions 113 may include any optional user-defined custom functions implementing customized logic for use with custom ILM policies, and may be written as procedural functions in any language supported by database 120, including PL/SQL and Java. Custom functions 113 may be previously registered into database 120, stored as metadata within user procedures table 148.

The customized logic of custom functions 113 may optionally utilize internal database access statistics, such as segment or block level heatmaps, to access a variety of useful information for database objects including a last access time, a last modified time, and a creation time, which can be used to derive a minimum period of read inactivity, a minimum period of write inactivity, or a length of time since the creation time. The access statistics may not be directly exposed and may instead be externalized and exposed to custom functions 113 via an application programming interface (API), as described in greater detail below under the Heatmap Statistics API heading.

In some embodiments, custom functions 113 may access data information sources outside of database management system 100, for example by accessing data from business logic server 172 over network 170, which may comprise a network such as the Internet or a local intranet. Business logic server 172 may be an internal server providing in-house logic and services, or a public server providing public and third-party logic and services.

Once a policy clause is received by database server instance 110, it may be parsed and stored within ILM policy table 142 of data dictionary 140. The policy may be associated with specific database objects in policy to object association table 144. Since policies can be inherited from parent objects, policy to object association table 144 may map a policy to various database objects at different scopes within database 120. For example, a policy specified on tablespace 130A may be associated with tablespace 130A at the tablespace scope, with table 132 at the table scope, and with table partition 133 at the table partition scope. Furthermore, any new or future database objects created in tablespace 130A will also inherit the policy specified on tablespace 130A.

Task scheduler 115 may be a multi-instance and resource aware task scheduler that can schedule and delegate tasks to database instances based on free resources, such as memory and processing cycles. On a customizable periodic schedule, background policy evaluator 116 may evaluate each policy in ILM policy table 142. If a policy has its condition satisfied with respect to any of the mappings in policy to object association table 144, then a task may be generated for that mapping, with the task queued into ILM task table 146. Policies that can occur only once for a particular database object may be disabled after triggering to reduce future parsing time.

Task scheduler 115 may operate in the background, consuming the queue in ILM task table 146 to delegate tasks to database instances according to available resources, such as memory and processor cycles. Thus, tasks from ILM task table 146 may be loaded into ILM active tasks 118 for execution by database server instance 110, which may occur while database 120 is online. Ongoing status of running ILM tasks and results of finished or failed ILM tasks may also be maintained within ILM task table 146. Data structures of database management system 100 such as redo and undo records may be utilized to roll back, recover, and retry failed ILM tasks.

### HEATMAP STATISTICS API

An API may be provided that externalizes heatmap statistics for database objects at various scopes. The API may be implemented using a PL/SQL package of PL/SQL functions, by using defined database views, or by other interfaces. The functions within the API can then be used within custom functions 113 to implement any customized logic as desired by the database user. The use of these API functions is optional and the customized logic can be completely independent of the API functions. An example heatmap statistics API is described below as a PL/SQL package "dbms_heat_map".

A function BLOCK_HEAT_MAP of dbms_heat_map may accept a table segment as an input and return block level heatmap records, including modified times for each database block in the table segment. The modified times may include a maximum or latest modified time. Each record may also include other identifying data such as the associated database block number and file number. Optionally, a sort column and a sort order may be specified to order the returned records.

A function EXTENT_HEAT_MAP of dbms_heat_map may accept a table segment as an input and return extent level heatmap information, including one or more last modified times for each extent in the table segment, which are derived from aggregate statistics on the database blocks in each extent. The one or more last modified times may include a minimum, maximum, and average.

A function SEGMENT_HEAT_MAP of dbms_heat_map may accept a segment as an input and return segment level heatmap information, including one or more access times for the segment. The one or more access times may include read times, write times, full text search times, and lookup times, and each access time may include a minimum, maximum, and average. If a particular type of access is not applicable to the segment or has never occurred, then a zero, null, or other preset value may be provided.

A function OBJECT_HEAT_MAP of dbms_heat_map may accept a table object and return object level heatmap information, including access times for all segments belonging to the table object. For example, the table object may be a table having several table partitions in different segments. For each segment in the table object, the OBJECT_HEAT_MAP function may return segment level heatmap information substantially similar to that provided by the SEGMENT_HEAT_MAP function.

A function TABLESPACE_HEAT_MAP of dbms_heat_map may accept a tablespace and return tablespace level heatmap information, including one or more access times for the tablespace, which are derived from aggregate statistics on the segments within the tablespace. The one or more access times may include read times, write times, full text search times, and lookup times, and each access time may include a minimum, maximum, and average. If a particular type of access is not applicable to the segment or has never occurred, then a zero, null, or other preset value may be provided. Further, a total segment count and allocated byte size may be returned.

Besides functions in dbms_heat_map, defined database views can also be provided to expose the heatmap information. For example, a defined view DBA_HEAT_MAP_SEGMENT may provide substantially the same information as the SEGMENT_HEAT_MAP function, and a defined view DBA_HEAT_MAP_SEG_HISTOGRAM may provide a summary access histogram over time for a particular segment.

### PROCESS OVERVIEW

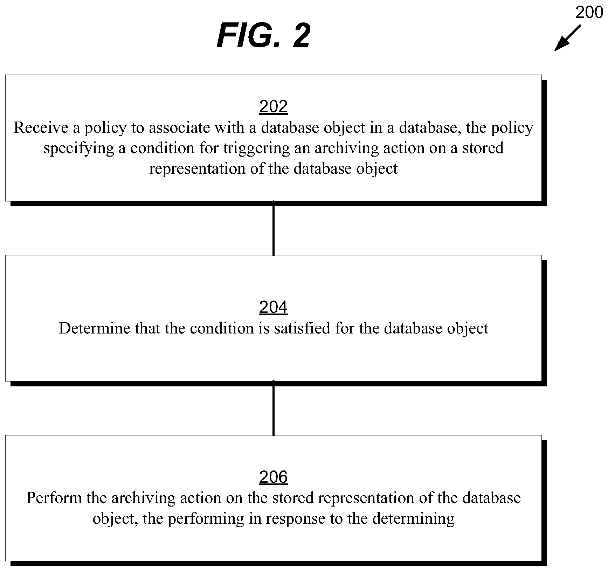

With a basic outline of database management system 100 now in place, it may be instructive to review a high level overview of the processing steps to define and carry out an ILM policy. Turning to FIG. 2, FIG. 2 is a flow diagram that depicts a process 200 for policy driven data movement and information lifecycle management, according to an embodiment.

### RECEIVING A DECLARATIVE POLICY STATEMENT

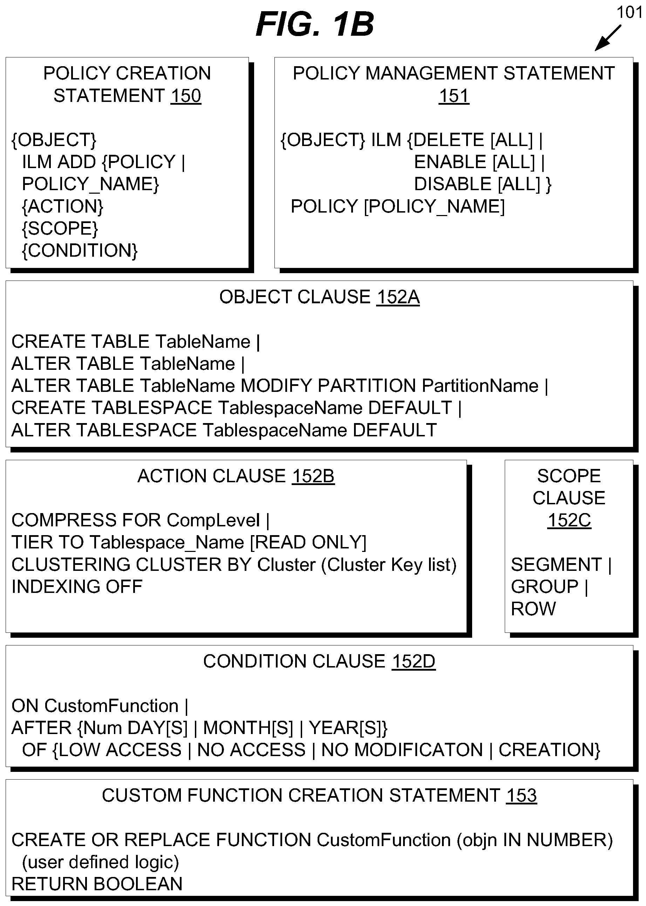

At block 202 of process 200, referring to FIG. 1A, database server instance 110 receives a policy to associate with a database object in database 120, the policy specifying a condition for triggering an archiving action on a stored representation of the database object. In some embodiments, database server instance 110 also registers a custom function in response to receiving a user input from the user requesting to register the custom function. A detailed description of this registration is described below under the Custom Function Registration heading. As discussed above, the policy may be specified as part of an ILM policy clause in a database command, which may be received from a database client user or application. A detailed breakdown of a syntax for the ILM policy clause is shown in FIG. 1B.

FIG. 1B is a block diagram that depicts an example declarative statement syntax to define policies for data movement and information lifecycle management in a database management system, according to an embodiment. Diagram 101 of FIG. 1B includes policy creation statement 150, policy management statement 151, object clause 152A, action clause 152B, scope clause 152C, condition clause 152D, and custom function creation statement 153.

Policy creation statement 150 shows the various component clauses for a database statement that creates an ILM policy. First is the {OBJECT} clause, which creates or modifies a database object. Next is the keyword "ILM ADD", which indicates that a new ILM policy is being defined for the database object created or modified in {OBJECT}. After the "ILM ADD" keyword, a friendly [POLICY_NAME] may be given to the ILM policy; otherwise, a schema-unique policy name may be generated automatically by using the POLICY keyword. After the policy name are various components specifying the details of the ILM policy: {ACTION} for the archiving action to execute on the database object, {SCOPE} for the scope, and {CONDITION} for the condition before the archiving action is triggered.

### POLICY OBJECT CLAUSE

As discussed above, the {OBJECT} clause creates or modifies a database object. Thus, examples are shown in object clause 152A to create a table, to modify a table, and to modify a table partition. In the case of creating or modifying tablespaces, the keyword "DEFAULT" is always appended to the end to emphasize that policies attached to tablespaces propagate hierarchically to child objects of the tablespace. Thus, any future created tables, table partitions, indexes, and other database objects within the tablespace will inherit the defined policy by default. While not specifically shown in object clause 152A, a policy may also be defined on a schema-wide basis, affecting all database objects of a particular database user.

### POLICY ACTION CLAUSE

The {ACTION} clause specifies the ILM archiving action to perform on the stored representation of the {OBJECT}. As discussed above, an archiving action places the data object into an appropriate storage tier for a lifecycle phase of the database object, where the storage tier may represent a type of storage medium and/or the technique used to compress or store the data on the storage medium. Action clause 152B shows four example archiving actions. The first example archiving action compresses to a target CompLevel, which may include OLTP, QUERY LOW, QUERY HIGH, ARCHIVE LOW, and ARCHIVE HIGH, in order of lowest to highest compression level. The OLTP level may optionally specify the "INPLACE" keyword to prevent rows from being moved and consolidated, thereby avoiding index rebuilding.

The second example archiving action, "TIER TO", causes data movement of the database object into a target storage container, such as a tablespace. Typically, this is used to move inactive data from a high cost tablespace to a lower cost tablespace, such as from tablespace 130A to tablespace 130B in FIG. 1A. Optionally, the [READ ONLY] keyword may be specified to mark the target tablespace as read-only after moving the database object, which may help to accelerate backup operations.

The third example archiving action clusters a table on a specified cluster and cluster keys. By clustering a table, data that is accessed together can be spatially colocated to improve performance.

The fourth example archiving action disables indexing for a particular database object. When the database object is a table that is split into table partitions, then this action can be used to implement partial indexing, reducing the size and depth of the global index.

Other archiving actions may also be specified that are not specifically listed in action clause 152B. For example, a "move" archiving action may be specified to rebuild and re-sort a database object such as an index-sorted table.

### POLICY SCOPE CLAUSE

The {SCOPE} clause specifies the scope with respect to the database object. As shown in scope clause 152C, three scopes are defined. SEGMENT refers only to the segment that contains the database object, for example the segment of a table. GROUP refers to the SEGMENT as well as any dependent objects, such as indexes and large objects (LOBs). ROW refers to individual rows of the database object. For example, if a COMPRESS FOR {ACTION} is specified on the ROW {SCOPE} for a database table, then only those individual rows in the database table meeting the specified {CONDITION} are compressed, leaving the other rows as-is.

### POLICY CONDITION CLAUSE

The {CONDITION} clause specifies a pre-condition before the specified {ACTION} is triggered on the {OBJECT}. Two example clauses are shown; the first example clause refers to a specific CustomFunction that should be called with the {OBJECT}. The CustomFunction may be a Boolean function that returns a TRUE or FALSE value. If a TRUE is returned, then the condition is satisfied and the {ACTION} is triggered.

The second example clause in condition clause 152D specifies a minimum period in which a particular state must be met, where the period is defined by a number of days, months, or years. The minimum period may be specified for an activity-level condition such as a low-access pattern on the database object (LOW ACCESS), for no accesses or read and write inactivity on the database object (NO ACCESS), for no modifications or write inactivity on the database object (NO MODIFICATION), or for a period of time since a creation time of the database object (CREATION). To determine whether the minimum period is met, various access statistics may be utilized, which may be derived from a segment or block level heatmap of the database. For an activity-level condition, one or more criteria may be used in the determination, including the various access statistics and one or more costs of changing from a current compression level to a target compression level after performing the <ACTION> clause. In the case of certain {ACTION} clauses, such as the "TIER TO" clause, the {CONDITION} clause may be omitted, since a "TIER TO" clause may implicitly indicate an "ON FULLNESS THRESHOLD" condition, wherein a storage container of the database object, such as a tablespace, meets a fullness threshold.

### CUSTOM FUNCTION REGISTRATION

Since the CustomFunction must first exist before using any policy invoking the CustomFunction, the user may provide user input in the form of database commands, similar to custom function creation statement 153, to define and request registration of one or more user-defined custom functions into database 120. As shown, each registration statement defines a name of the custom function ("CustomFunction"), one or more input arguments ("objn IN NUMBER"), a return type ("RETURN BOOLEAN"), and an implementation or code to carry out the user defined logic. In response, database management system 100 may add or update metadata in user procedures table 148, which may be specifically reserved for storing user-defined procedures, functions, and packages. After database server instance 110 starts, procedural extensions 112 may retrieve the stored custom functions 113 from user procedures table 148 to service any custom function calls from background policy evaluator 116.

As shown in custom function creation statement 153, "objn IN NUMBER" defines an input parameter, which may correspond to an object number for the associated database object. In other embodiments, a pointer may be passed instead of an object number. Within the body of the function, any user-defined custom logic can be implemented, which may access internal and external data sources, as discussed above. A final result is returned as a BOOLEAN TRUE or FALSE value, where TRUE indicates that the {ACTION} of the policy should be carried out on the database object.

While the implementation code for custom functions 113 may be stored as part of user procedures table 148, some portion of the implementation code may be external to database 120. For example, external C or Java executable files or dynamic link libraries may be called from a location outside of database 120, such as business logic server 172. In this case, user procedures table 148 may only store calls to the external functions in lieu of the actual implementation code.

### POLICY ASSOCIATION

Once a policy statement is received according to the syntax shown in policy creation statement 150, database server instance 110 may parse the policy statement and record the parsed policy into ILM policy table 142. Additionally, the policy may be associated with the database object {OBJECT} as well as all child database objects according to policy inheritance. These associations may be recorded in policy to object association table 144.

To prevent users from exceeding their permission levels, database server instance 110 may confirm that the user who created the custom function in the {CONDITION} clause has an ownership of the {OBJECT} before associating the policy, and task scheduler 115 may limit the execution privileges of any tasks generated from the policy to the same permissions of the user.

### ILM POLICY MANAGEMENT

After a policy is created for a database object, the policy may be enabled, disabled, or deleted for the database object and its child objects by using the syntax shown in policy management statement 151. Additionally, ILM package 114 may be utilized to provide advanced policy management features. For example, policies may be assigned to execute at specific priority levels, which may affect the scheduling decisions of task scheduler 115. Additionally, a maximum number of concurrent task job executions may be configured, and resource utilization levels may be specified for all ILM tasks in general and/or for specific ILM task jobs. Policies may also be forced to immediately execute their archiving actions regardless of whether their conditions are met.

Additionally, policies may be set to evaluate according to a specified schedule. By default, background policy evaluator 116 may evaluate all policies in ILM policy table 142 according to a periodic time interval, for example every 15 minutes or by another interval calibrated by a database administrator. However, this interval may be too frequent for certain policies that require a long time to evaluate their conditions. In this case, policies may be set to evaluate during a scheduled maintenance window or according to a customized schedule, rather than the default periodic time interval of 15 minutes. Thus, the user or database administrator who creates a policy may further specify a customized schedule specific for the policy. In this manner, the evaluation of the policy conditions may be grouped according to different schedules, for example every 15 minutes, daily, weekly, and during maintenance windows.

### FIRST ILM USE CASE

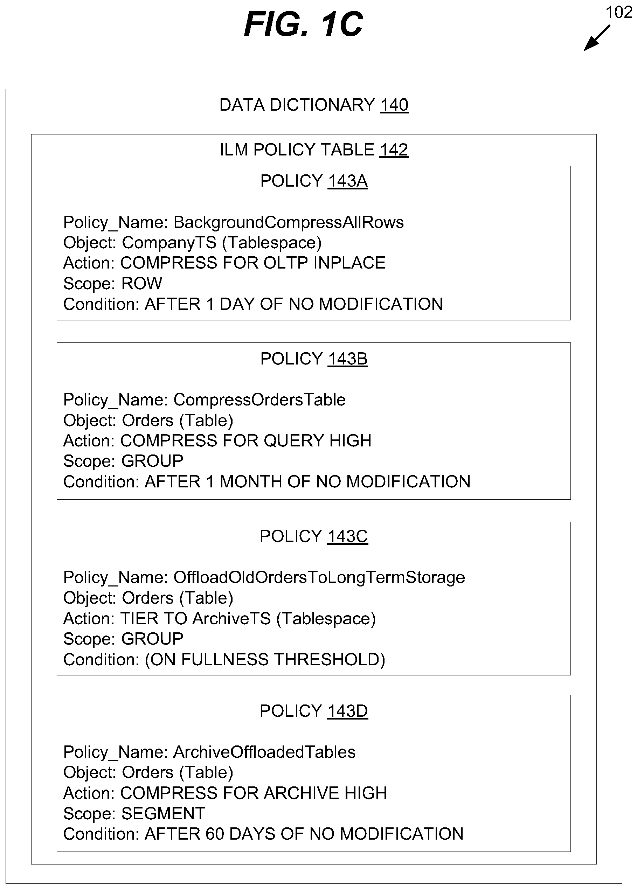

To provide an example of recorded ILM policies using the syntax discussed above, FIG. 1C is a block diagram that depicts example policies for data movement and information lifecycle management in a database management system, according to an embodiment. Diagram 102 of FIG. 1C includes data dictionary 140. Data dictionary 140 includes ILM policy table 142. ILM policy table 142 includes policy 143A, policy 143B, policy 143C, and policy 143D. With respect to FIG. 1C, like numbered elements may correspond to the same elements from FIG. 1A.

### ROW COMPRESSION POLICY

ILM policy table 142 contains several policies that demonstrate an example ILM use case for database 120. For example, to compress new data that is in a high relevance lifecycle phase while maintaining high performance, the database administrator may want to compress rows in the main CompanyTS tablespace with OLTP compression after one day with no modifications, as reflected by policy 143A. Since policy 143A is specified on the CompanyTS tablespace, it is inherited to all future child objects, including table 132 or the Orders table, and table partition 133 or the Orders_2012 partition. Since policy 143A is specified at the row scope, only those rows that are not modified for at least 1 day are compressed with OLTP compression; other rows that have been modified within the last 1 day remain uncompressed for quick modification.

Note that policy 143A effectively defers compression to the background, since the compression is only queued as an ILM task after the one day of no modifications is met, where the ILM tasks are distributed in the background by task scheduler 115. In this manner, resource intensive compression operations that are typically foreground operations at the time of row insertion can now be deferred as background operations to maintain low database latency.

### TABLE PARTITION COMPRESSION POLICY

Next, if the table partitions of the Orders table have not been modified for a month, then the table partitions should be compressed to a higher QUERY HIGH level of compression, as reflected in policy 143B, to reflect a medium relevance lifecycle stage. For example, the Orders table may be partitioned by year of order, with Orders_2012 representing all orders for the year 2012. Since policy 143B is specified on the Orders table, all table partitions of the Orders table also inherit policy 143B. Accordingly, if any of the table partitions of the Orders table are idle for 1 month without any modifications, then the table partition may be compressed to the QUERY HIGH level. Since the scope is specified to be GROUP, all dependent indexes and LOBs are also compressed as well.

### AUTOMATIC FULLNESS STORAGE TIERING POLICY

If space is running low in the CompanyTS tablespace, then the least active table partitions of the Orders table should be automatically offloaded to low cost storage in the ArchiveTS tablespace, as reflected in policy 143C. As previously described, a "TIER TO" action implicitly indicates an "ON FULLNESS THRESHOLD" condition. Thus, once CompanyTS reaches above a specific fullness threshold, which may be a configurable value, then the table partitions of the Orders table are moved to the ArchiveTS tablespace, in order of least activity, until the fullness of CompanyTS falls below the fullness threshold. For example, the table partitions in the Orders table may be sorted according to database activity, with the least active partitions, as indicated by a last access or modification time, being preferred for movement. Thus, an Orders_2000 table partition that was last accessed 10 years ago will be moved before the Orders_2012 table partition that was last accessed 1 day ago. Since the scope is specified to be GROUP, all dependent indexes and LOBs are also moved.

Note that even if all table partitions of the Orders table are highly active, the least active of those highly active table partitions will nevertheless be tiered to the ArchiveTS tablespace when the CompanyTS tablespace exceeds the fullness threshold. Depending on the operational goals of the database administrator, it may be undesirable to tier highly active data to a low cost tablespace. Thus, before creating a policy with a "TIER TO" action clause, a database administrator may want to consider the activity patterns of the database object to be tiered, the total size and available free space in a tablespace containing the database object, the potential expansion capabilities of the tablespace, and the specific fullness threshold setting.

### ARCHIVING POLICY

To preserve storage space, policy 143D specifies that Orders (Table) should be compressed to the ARCHIVE HIGH level of compression after 60 days of no modification. Since policy 143D may be triggered immediately after policy 143C, which moves segments from the CompanyTS to the ArchiveTS tablespace, it is possible that an ILM task may be created to consolidate both tasks into a single operation.

### POLICY EVALUATION

Having established an example set of recorded ILM policies, process 200 may continue by using policy 143A as corresponding to the specific policy that was received in block 202. Accordingly, at block 204 of process 200, referring to FIG. 1A, database server instance 110 evaluates policy 143A to determine that the condition is satisfied for the database objects in tablespace 130A (CompanyTS). Since the scope is specified at the row scope, policy to object association table 144 may be used to find the child objects of tablespace 130A that inherited policy 143A and contain rows for testing the condition. For simplicity, only table partition 133 (Orders_2012) is identified from policy to object association table 144.

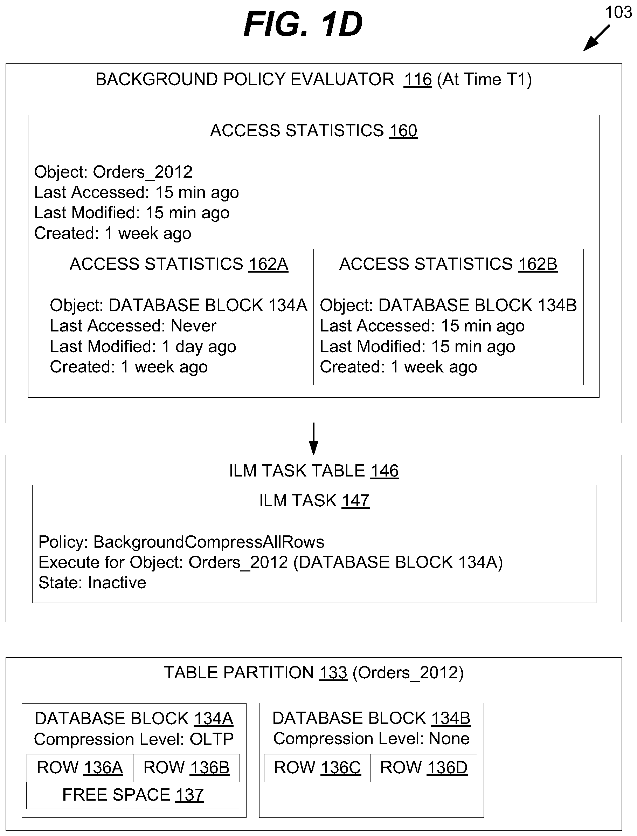

Turning to FIG. ID, FIG. 1D is a block diagram that depicts an example evaluation of a policy for data movement and information lifecycle management, according to an embodiment. Diagram 103 of FIG. 1D includes background policy evaluator 116, ILM task table 146, and table partition 133. Background policy evaluator 116 includes access statistics 160. Access statistics 160 includes access statistics 162A and access statistics 162B. ILM task table 146 includes ILM task 147. Table partition 133 includes database block 134A and database block 134B. Database block 134A includes row 136A, row 136B, and free space 137. Database block 134B includes row 136C and row 136D. With respect to FIG. ID, like numbered elements may correspond to the same elements from FIG. 1A.

Background policy evaluator 116, at time T1, initiates an evaluation of policy 143A with respect to table partition 133 (Orders_2012). As previously discussed, evaluation may occur at a default periodic interval or 15 minutes or by a custom schedule. Thus, T1 may indicate a time when the periodic interval or the custom schedule is triggered.

At time T1, background policy evaluator 116 may calculate access statistics 160, for example by using a segment or block level heatmap of database 120. A block level heatmap of database 120 may indicate activity such as a last accessed time, a last modified time, and a creation time for database blocks within database 120. As shown in access statistics 160, with respect to Orders_2012 at time T1, a last access time is 15 minutes ago, a last modified time is 15 minutes ago, and a creation time is 1 week ago. As shown in access statistics 162A, with respect to database block 134A at time T1, a last access time is never, a last modified time is 1 day ago, and a creation time is 1 week ago. As shown in access statistics 162B, with respect to database block 134B at time T1, a last access time is 15 minutes ago, a last modified time is 15 minutes ago, and a creation time is 1 week ago.

Policy 143A is defined as a row scope policy, and the condition is "AFTER 1 DAY OF NO MODIFICATION". Accordingly, access statistics 160 may be searched for all database blocks of the specified database object that have access statistics indicating a "Last Modified" time of 1 day or longer. Access statistics 162A meets this condition, indicating that all rows within database block 134A have not been modified for at least 1 day.

### TASK QUEUING

At block 206 of process 200, referring to FIG. 1A and FIG. ID, database server instance 110 performs the archiving action on the rows stored in database block 134A, wherein the performing is in response to the determining of block 204. In an embodiment, the performing may be by queuing ILM task 147 for executing the archiving action on the rows stored in database block 134A. Accordingly, ILM task 147 may be queued in ILM task table 146. Since block 204 determined that database block 134A satisfied the condition of policy 143A, ILM task 147 is populated as shown, indicating policy 143A, or the "BackgroundCompressAllRows" policy, to be executed on the rows of Orders_2012 within database block 134A.

Since a block level heatmap is utilized in this example, a condition of the row scope policy is treated as being satisfied for a group of rows within a database block. In alternative embodiments, if a row-specific statistics data source is used rather than a block level heatmap, for example by using access statistics reserved in additional statistics columns of each data row, then tasks for database objects may be queued for individual rows rather than for groups of rows within database blocks. A description of such additional statistics columns is described in the patent "Techniques for Activity Tracking, Data Classification, and In Database Archiving".

As shown in ILM task 147, the task is initially set to an "Inactive" state, awaiting execution. Task scheduler 115 may automatically retrieve and delegate ILM task 147 from the queue in ILM task table 146. However, in some instances, a database administrator may wish to view the queue of tasks and manually approve tasks before allowing execution. In this case, task scheduler 115 may only process queued tasks in ILM task table 146 that are approved by the user.

### TASK EXECUTION

Database server instance 110 executes ILM task 147 after it is de-queued. For example, task scheduler 115 may process a task queue in ILM task table 146 to delegate ILM task 147 to a specific database instance, for example as part of ILM active tasks 118 of database server instance 110. The status of ILM task 147 may thus be updated to "Active".

After database server instance 110 executes the archiving action specified in ILM task 147, the structure of table partition 133 may appear as shown in FIG. ID, where rows 136A and 136B in database block 134A are compressed to OLTP compression level. Since the "INPLACE" keyword was specified in the action clause of policy 143A, no rows are moved between database blocks, and only free space 137 is reserved within database block 134A, which may be used to store additional rows inserted at a later time. Database block 134B, including rows 136C and 136D, remains uncompressed. The status of ILM task 147 may be updated to "Completed", and ILM task 147 may be removed from ILM active tasks 118.

### EVALUATING TABLE PARTITION COMPRESSION

Having reviewed process 200 with respect to policy 143A, it may be useful to review the end result of process 200 with another example policy, such as policy 143B. Turning to FIG. IE, FIG. IE is a block diagram that depicts an example evaluation of a policy for data movement and information lifecycle management, according to an embodiment. Diagram 104 of FIG. IE includes background policy evaluator 116, ILM task table 146, and table partition 133. Background policy evaluator 116 includes access statistics 160. Access statistics 160 includes access statistics 162A and access statistics 162B. ILM task table 146 includes ILM task 147. Table partition 133 includes database block 134A. Database block 134A includes row 136A, row 136B, row 136C, and row 136D. With respect to FIG. IE, like numbered elements may correspond to the same elements from FIG. 1A.

In FIG. IE, process 200 may proceed in a similar fashion as described above, but with respect to policy 143B. Since the condition is "AFTER 1 MONTH OF NO MODIFICATION", access statistics 160 can be used to determine that the last modification to table partition 133 (Orders_2012) was 1 month, 15 minutes ago at time T2, which may occur one month after time T1. Note that since policy 143B is group scope, or segment scope with dependent objects, it is not necessary to use the more detailed block level access statistics 162A and 162B. Having met the condition at the segment scope, ILM task 147 is therefore queued with respect to Orders_2012 and any dependent objects, such as indexes as LOBs, which are omitted for simplicity.

Table partition 133 of FIG. IE reflects a state after ILM task 147 is completed and the archiving action "COMPRESS FOR QUERY HIGH" is executed. Note that since the entire segment for table partition 133 is compressed to the "Query High" level, all of the database blocks may be recreated from scratch to consolidate the rows. Accordingly, a single database block 134A may now be sufficient to store all four rows 136A-136D using the "Query High" compression level. Database block 134B is free and may be used to store other data.

### EVALUATING CONSOLIDATED TASKS

In some cases, multiple tasks may be consolidated into a single operation for higher performance and efficiency. An example is shown in FIG. IF, where FIG. IF is a block diagram that depicts an example evaluation of policies for data movement and information lifecycle management, according to an embodiment. Diagram 105 of FIG. IF includes background policy evaluator 116, ILM task table 146, tablespace 130A, and tablespace 130B. Background policy evaluator 116 includes access statistics 160, which includes access statistics 162. ILM task table 146 includes ILM task 147. Tablespace 130A includes table 132. Tablespace 130B includes table partition 133. Table partition 133 includes database block 134A. Database block 134A includes row 136A, row 136B, row 136C, and row 136D. With respect to FIG. IF, like numbered elements may correspond to the same elements from FIG. 1A.

In FIG. IF, process 200 may proceed in a similar fashion as described above, but with respect to policies 143C and 143D. For example, if fullness threshold is calibrated to 60%, then access statistics 160 indicates that the condition "ON FULLNESS THRESHOLD" for policy 143C is met at time T3 after time T2, since tablespace 130A (CompanyTS) is already 70% full. Since policy 143C is defined on the Orders table, the table partitions of the Orders table are sorted by inactivity and the least active partitions are moved to the target, or tablespace 130B (ArchiveTS). Since there is only one table partition, or table partition 133, a task is generated to move table partition 133 to tablespace 130B.

However, in the course of evaluating all of the policies in ILM policy table 142, background policy evaluator 116 may also determine that policy 143D will be satisfied immediately after the above task is completed, since moving the table partition results in a new table partition being created in tablespace 130B (ArchiveTS), and table partition 133 is already inactive for over 60 days, as indicated by access statistics 162. Accordingly, the tasks that have their conditions satisfied on the same database object may be consolidated into a single task, or ILM task 147 as shown, where the archiving action specifies table partition 133 (Orders_2012) to be moved into ArchiveTS ("TIER TO ArchiveTS") and compressed to Archive High ("COMPRESS FOR ARCHIVE HIGH") in a single operation. In this manner, redundant recompression work is avoided that would normally occur when the operations are carried out separately with a first move operation and a second in-place recompression.

As shown in FIG. IF, the archiving action is executed to move table partition 133 from tablespace 130A to tablespace 130B, where it is compressed at the "Archive High" level. Additionally, since policy 143C is specified at the GROUP scope, any dependent objects of table partition 133, such as indexes and LOBs, may also be moved from tablespace 130A to tablespace 130B.

### SECOND ILM USE CASE - CUSTOM FUNCTION

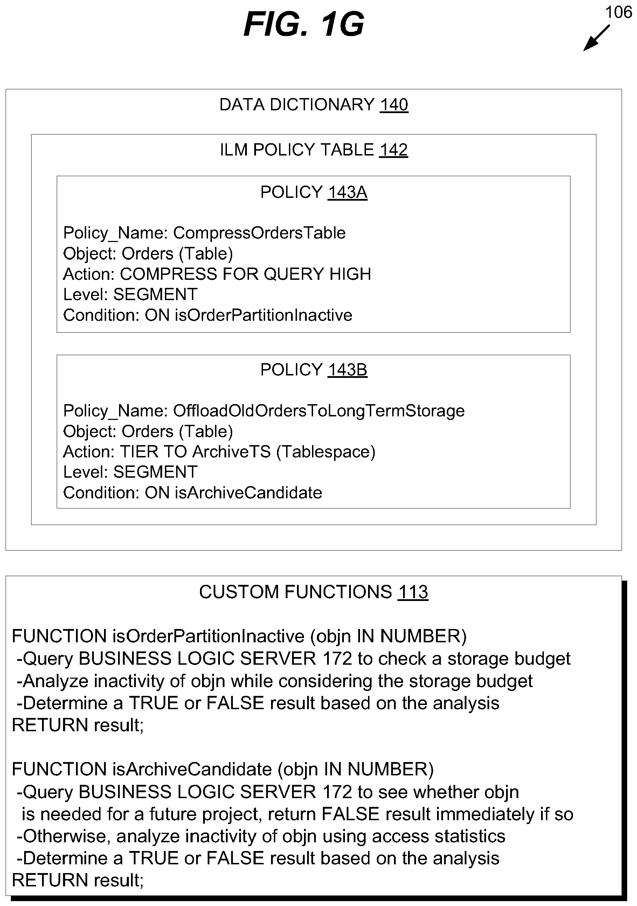

To provide another example of recorded ILM policies using the syntax discussed above, FIG. 1G is a block diagram that depicts example custom policies for data movement and information lifecycle management in a database management system, according to an embodiment. Diagram 106 of FIG. 1G includes data dictionary 140 and custom functions 113. Data dictionary 140 includes ILM policy table 142. ILM policy table 142 includes policy 143A and policy 143B. With respect to FIG. 1G, like numbered elements may correspond to the same elements from FIG. 1A.

### TABLE PARTITION COMPRESSION POLICY

ILM policy table 142 of FIG. 1G contains several policies that demonstrate an example ILM use case with a custom function for database 120. New, uncompressed data may initially belong to a high relevance lifecycle stage. When table partitions of the Orders table are inactive, as determined by the custom function "isOrderPartitionInactive", then the table partitions are compressed to a higher QUERY HIGH level of compression, as reflected in policy 143A, to reflect a medium relevance lifecycle stage. For example, the Orders table may be partitioned by year of order, with Orders_2012 representing all orders for the year 2012. Since policy 143A is specified on the Orders table, all table partitions of the Orders table also inherit policy 143A. Accordingly, if any of the table partitions of the Orders table are TRUE according to "isOrderPartitionInactive", then the table partition may be compressed to the QUERY HIGH level. The "isOrderPartitionInactive" function may have been previously defined and registered into database 120 according to the steps outlined above under "CUSTOM FUNCTION REGISTRATION".

Referring to custom functions 113, example pseudo code is indicated for the "isOrderPartitionInactive" custom function. In this example, a corporate client may lease access to database 120, being billed according to the allocated size of tablespace 130A. In this case, the corporate client may want to specify, by their own business rules and logic, how aggressively to compress data within tablespace 130A, or more specifically on the Orders table partitions.

Since a financial situation for the corporate client may change over time, business logic server 172 is first queried to retrieve a most recent storage budget. If the storage budget is relatively generous, then data may be preferred to be kept in an uncompressed state for higher performance. However, if the storage budget is relatively tight, then data may be preferred to be compressed to minimize storage footprint. With this in mind, the access statistics for the table partition can be analyzed for inactivity, weighted by considerations of the storage budget, and a decision can be made whether compression should be carried out (returning TRUE) or not carried out (returning FALSE). As discussed previously, the access statistics may be based on a block level, segment level, or higher level heatmap of database 120, which may be accessible via ILM package 114 or another interface.

### STORAGE TIERING POLICY

If the table partitions of the Orders table are inactive for an extended time period, then the table partitions may be offloaded to low cost storage in the ArchiveTS tablespace, as reflected in policy 143B, to reflect a low relevance lifecycle phase. Thus, once the "isArchiveCandidate" custom function returns a TRUE value for a specific table partition of the Orders table, then the table partition is moved to the ArchiveTS tablespace. Otherwise, the table partition remains in the CompanyTS tablespace.

Referring to custom functions 113, example pseudo code is indicated for the "isArchiveCandidate" custom function. First, business logic server 172 is queried to see whether the table partition may be needed for a future project. For example, the company may decide to run a promotion in the future, where order data from prior years needs to be analyzed for customer targeting. In this case, custom logic at business logic server 172 may dictate that data within a specific time frame, such as 5 years, should be kept in the active tablespace and not archived. Thus, if the table partition is for orders within those 5 years, a FALSE is immediately returned and the function ends. If business logic server 172 does not immediately end the function, then the processing may proceed to analyze access statistics for the table partition, similar to the process described above for the "isOrderPartitionInactive" function. Access statistics indicating substantial modification activity may tend towards a FALSE result, whereas access statistics indicating a long period of inactivity may tend towards a TRUE result.

### POLICY EVALUATION

Having established an example set of recorded custom ILM policies, including a custom function, which may occur as part of block 202, process 200 may continue by using policy 143A of FIG. 1G as corresponding to the specific policy that was received in block 202. Accordingly, at block 204 of process 200, referring to FIG. 1A, database server instance 110 evaluates policy 143A to determine that the condition is satisfied for the database object, or table 132 (Orders). Policy to object association table 144 may be used to identify the child objects of table 132 that inherited policy 143A, such as table partition 133 (Orders_2012).

Background policy evaluator 116 initiates an evaluation of policy 143A with respect to table partition 133 (Orders_2012). As previously discussed, evaluation may occur at a default periodic interval or 15 minutes or by a custom schedule. To evaluate policy 143A, a custom function "isOrderPartitionInactive" within custom functions 113 of FIG. 1G is called, with the object number of table partition 133 passed as an input argument. Evaluating of the custom function may proceed as described above, and a TRUE result may be returned.

### TASK QUEUING AND EXECUTION

At block 206 of process 200, referring to FIG. 1A, in response to the evaluating of the custom function to a TRUE result, database server instance 110 performs the archiving action on table partition 133. Since block 204 discovered that table partition 133 satisfied the condition of policy 143A in FIG. 1G, a task may be queued in ILM task table 146, indicating policy 143A, or the "CompressOrdersTable" policy, to be executed on table partition 133. Block 206 may proceed with FIG. 1G in a similar manner as already discussed above with respect to FIG. 1C-1F.

After database server instance 110 executes the compression action specified in the ILM task, table partition 133 may be compressed to the QUERY HIGH compression level. Indexes may also be rebuilt, if necessary. After compression, it may be possible that all four rows 136A-136D fit in one compressed database block 134A, in which case database block 134B may be freed for other data. The status of the ILM task may be updated to "Completed", and the ILM task may be removed from ILM active tasks 118.

### THIRD ILM USE CASE - LOW ACCESS

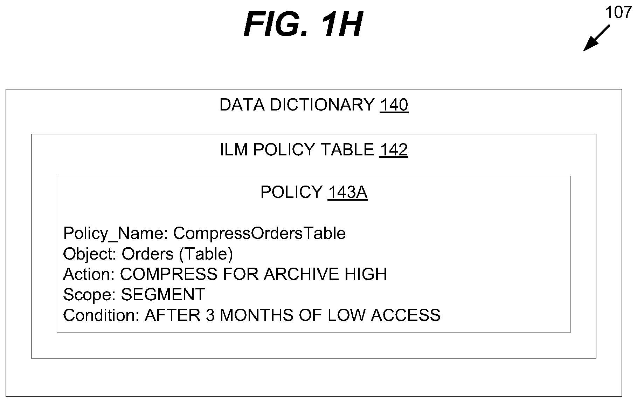

To provide another example of recorded ILM policies using the syntax discussed above, FIG. 1H is a block diagram that depicts example policies for automated information lifecycle management using low access patterns in a database management system, according to an embodiment. Diagram 107 of FIG. 1H includes data dictionary 140. Data dictionary 140 includes ILM policy table 142. ILM policy table 142 includes policy 143A. With respect to FIG. 1H, like numbered elements may correspond to the same elements from FIG. 1A. While only a single policy 143A is shown for simplicity, ILM policy table 142 may include multiple policies.

### TABLE PARTITION COMPRESSION POLICY

ILM policy table 142 of FIG. 1H contains policy 143A to demonstrate an example ILM use case with a low access condition for database 120. As shown in policy 143A, the associated database object is the Orders table, or table 132. Due to policy inheritance, the table partitions of table 132, including table partition 133 are also associated with policy 143A in policy to object association table 144. For example, the Orders table may be partitioned by year of order, with Orders_2012 representing all orders for the year 2012.

New data in table partition 133 may initially belong to a high relevance lifecycle stage, and may thus be compressed to a high performance OLTP level of compression, as shown in FIG. 1A. When table partitions of the Orders table enter a low activity state, as determined by the condition "AFTER 3 MONTHS OF LOW ACCESS", then the table partitions are compressed to a higher ARCHIVE HIGH level of compression, as reflected in policy 143A, to reflect a low relevance lifecycle stage. A determination of the low activity state or the "LOW ACCESS" pattern is described in further detail below.

### POLICY EVALUATION

Having established an example recorded ILM policy, process 200 may continue by using policy 143A as corresponding to the specific policy that was parsed as policy data in block 202. Accordingly, at block 204 of process 200, referring to FIG. 1A, database server instance 110 determines, by one or more criteria, that the activity-level condition in policy 143A is satisfied for at least one of the database objects specified by the policy statement. Since policy 143A specifies table 132 (Orders) as a parent object, policy to object association table 144 may be used to identify the child objects of table 132 that inherit policy 143A, such as table partition 133 (Orders_2012). Each identified database object may then be evaluated against policy 143A to determine whether the one or more criteria satisfy the activity-level condition.

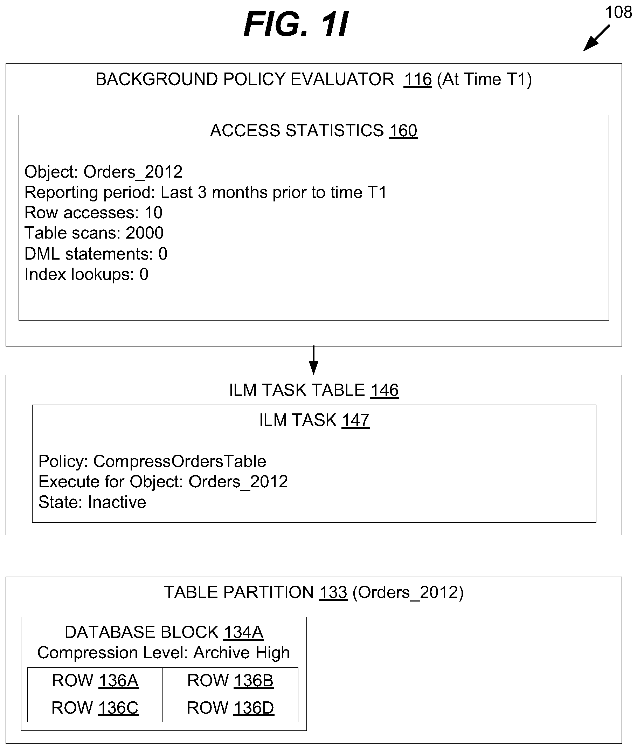

Turning to FIG. 1I, FIG. 1I is a block diagram that depicts an example evaluation of a policy for automated information lifecycle management using low access patterns, according to an embodiment. Diagram 108 of FIG. 1I includes background policy evaluator 116, ILM task table 146, and table partition 133. Background policy evaluator 116 includes access statistics 160. ILM task table 146 includes ILM task 147. Table partition 133 includes database block 134A. Database block 134A includes row 136A, row 136B, row 136C, and row 136D. With respect to FIG. 1I, like numbered elements may correspond to the same elements from FIG. 1A.

Background policy evaluator 116, at time T1, initiates an evaluation of policy 143A with respect to table partition 133 (Orders_2012). As previously discussed, evaluation may occur at a default periodic interval or 15 minutes or by a custom schedule. Thus, T1 may indicate a time when the periodic interval or the custom schedule is triggered.

At time T1, background policy evaluator 116 may calculate access statistics 160. Access statistics 160 may be derived from stored statistics recorded over time by database management system 100, where the stored statistics are kept as metadata within database 120. Some portion of access statistics 160 may be derived by using a segment level or block level heatmap of database 120. A segment level or block level heatmap of database 120 may indicate activity such as a last accessed time, a last modified time, and a creation time for database blocks within database 120.

As shown in access statistics 160, with respect to table partition 133 (Orders_2012), there were 10 row accesses or individual accesses to particular rows, 2000 table scans of the entire table partition, 0 DML statements that modified the table partition, and 0 index lookups. Since policy 143A specifies a minimum time period of 3 months, access statistics 160 is generated for a reporting period of the last 3 months prior to time T1. Thus, even if background policy evaluator 116 is invoked on a periodic 15 minute basis, evaluation of policy 143A may be postponed until at least 3 months of access statistics are gathered. If policy 143A does not specify a minimum time period, then database server instance 110 may use a default time period or automatically generate a minimum time period, which may be based on the parameters of policy 143A. For example, past activity levels of the associated database objects may be analyzed and a minimum time period may be calibrated to provide a sufficient quantity of statistics that enables an accurate cost analysis estimate for moving to the higher ARCHIVE HIGH compression level.

### LOW ACCESS METRIC

To determine whether the activity-level condition of policy 143A in FIG. 1H is satisfied, the one or more criteria may include an access metric falling under a threshold for "LOW ACCESS". The access metric may be based on access statistics 160. Further, the access metric may be based on one or more costs of changing a current compression level of the database object to the target compression level specified in policy 143A. Given that the object, table partition 133, is already compressed at the "OLTP" level, as shown in FIG. 1A, the action of policy 143A effectively changes a compression level of table partition 133 from a current "OLTP" level to a target "ARCHIVE HIGH" level.

For example, each type of access in access statistics 160 may be given a particular weight value in an access metric, reflecting the cost of performing that particular access in the current OLTP storage tier. These weights are, however, adjusted according to the cost of performing the same type of access in the target ARCHIVE HIGH storage tier. If the access metric remains below a threshold determined by database server instance 110, then the "LOW ACCESS" activity-level condition is satisfied.

For example, starting with row accesses, since individual row accesses may be fairly quick when using OLTP compression as individual compression units can be independently accessed, the 10 row accesses may be initially weighted relatively low. However, because individual row accesses may become very expensive once using ARCHIVE HIGH compression, the weighting may be increased accordingly.

Moving to table scans, table scans when using OLTP compression may be weighted higher than an individual row access in OLTP, since the entire table must be read. On the other hand, since a table scan when using ARCHIVE HIGH compression may actually be even faster than uncompressed data, as the highly compressed data may require less I/O activity, the weighting for table scans may be adjusted downward to reflect the possible performance gains by compressing to ARCHIVE HIGH. Thus, an end result may be that table scans are weighted less when compared to other actions, such as individual row accesses and DML statements.

Next, with DML statements that may modify or create new data, a relatively low weighting may be provided for OLTP compression, since rows can be added or modified relatively easily with independent compression blocks. On the other hand, the same DML statements as applied to ARCHIVE HIGH compression may require an expensive recompression operation for a large chunk of data, possibly the entire table partition, as individual rows may be difficult to modify separately using such a highly compressed format. As such, DML statements may be adjusted to a much higher weight.

Thus, access statistics 160 can be analyzed to create an access metric that also integrates access costs for the database object within storage tiers before and after the archiving action, or for a current compression level and a target compression level specified in the policy. While the example for policy 143A specifically concerns compression, a similar cost analysis might be applied for moving between one tablespace to another, for example by additionally considering a cost of ownership to store the database object in each tablespace as one criterion when calculating the access metric. Thus, various criteria can be considered for the activity-level condition.

Database server instance 110 may determine the threshold for reaching a low activity state or "LOW ACCESS" according to knowledge of the storage tiers, heuristics, past data analysis, estimators, and other data. If the weighted access metric falls below the threshold, then the condition clause may be satisfied for policy 143A and the action clause may be immediately performed or queued for performing by task scheduler 115. Otherwise, the condition clause is not satisfied and the action clause is not performed.

For the present example, database server instance 110 may determine that the condition is satisfied. Even though access statistics 160 indicates a large number of expensive table scans, because those table scans may execute with higher performance in an ARCHIVE HIGH level of compression compared to the current OLTP level of compression, a cost analysis using the access metric above may indicate that the reduced access costs flowing from the performance gains justifies executing the policy action compared to the status quo of not executing the action. A different result may occur if access statistics 160 is mostly individual row accesses and DML statements, where an ARCHIVE HIGH compression level is less appropriate compared to OLTP.

Note that since the threshold for the low activity state is determined by database server instance 110 rather than being explicitly specified in policy 143A, the database user does not need to consider and worry about setting complex parameters and settings, as the database automatically makes the "LOW ACCESS" determination by using the process described above.

### INDEX MAINTENANCE

The number of index lookups and table scans in access statistics 160 may also be utilized to perform automatic index maintenance, such as creating, disabling, and deleting indexes. For example, if a large number of table scans occur, then an index might be automatically created. If an index exists but is rarely used, then the index may be disabled or even deleted. This feature can also be utilized for partial indexing.

### TASK QUEUING AND EXECUTION

At block 206 of process 200, referring to FIG. 1A and FIG. 1I, in response to determining that the activity-level condition is satisfied in block 204, database server instance 110 performs the archiving action. Since block 204 determined that the "LOW ACCESS" activity-level condition of policy 143A in FIG. 1H was satisfied for at least one database object, ILM task 147 is populated as shown, indicating policy 143A, or the "CompressOrdersTable" policy, to be executed on Orders_2012 table partition, or table partition 133. Block 206 may proceed with FIG. 1G-1H in a similar manner as already discussed above with respect to FIG. 1C-1F.

After database server instance 110 performs the archiving action specified in ILM task 147, the structure of table partition 133 may appear as shown in FIG. ID, where table partition 133 is recompressed to the "ARCHIVE HIGH" level of compression. Since the "ARCHIVE HIGH" level may provide a higher compression ratio than the "OLTP" level, rows 136A-136D may all be contained in a single database block 134A, freeing space that was previously occupied by database block 134B. The status of ILM task 147 may be updated to "Completed", and ILM task 147 may be removed from ILM active tasks 118.

### HARDWARE SUMMARY

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

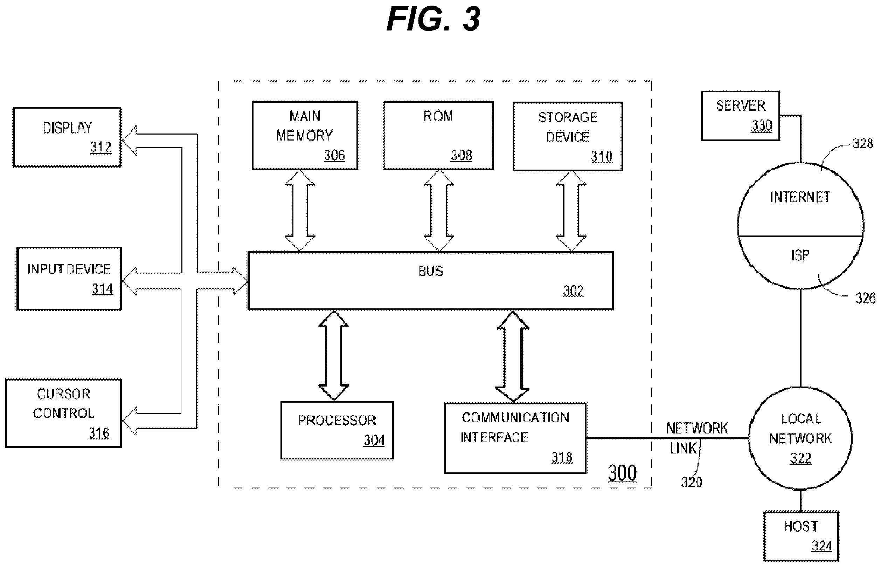

For example, FIG. 3 is a block diagram that illustrates a computer system 300 upon which an embodiment of the invention may be implemented. Computer system 300 includes a bus 302 or other communication mechanism for communicating information, and a hardware processor 304 coupled with bus 302 for processing information. Hardware processor 304 may be, for example, a general purpose microprocessor.

Computer system 300 also includes a main memory 306, such as a random access memory (RAM) or other dynamic storage device, coupled to bus 302 for storing information and instructions to be executed by processor 304. Main memory 306 also may be used for storing temporary variables or other intermediate information during execution of instructions to be executed by processor 304. Such instructions, when stored in storage media accessible to processor 304, render computer system 300 into a special-purpose machine that is customized to perform the operations specified in the instructions.

Computer system 300 further includes a read only memory (ROM) 308 or other static storage device coupled to bus 302 for storing static information and instructions for processor 304. A storage device 310, such as a magnetic disk or optical disk, is provided and coupled to bus 302 for storing information and instructions.

Computer system 300 may be coupled via bus 302 to a display 312, such as a cathode ray tube (CRT), for displaying information to a computer user. An input device 314, including alphanumeric and other keys, is coupled to bus 302 for communicating information and command selections to processor 304. Another type of user input device is cursor control 316, such as a mouse, a trackball, or cursor direction keys for communicating direction information and command selections to processor 304 and for controlling cursor movement on display 312. This input device typically has two degrees of freedom in two axes, a first axis (e.g., x) and a second axis (e.g., y), that allows the device to specify positions in a plane.

Computer system 300 may implement the techniques described herein using customized hard-wired logic, one or more ASICs or FPGAs, firmware and/or program logic which in combination with the computer system causes or programs computer system 300 to be a special-purpose machine. According to one embodiment, the techniques herein are performed by computer system 300 in response to processor 304 executing one or more sequences of one or more instructions contained in main memory 306. Such instructions may be read into main memory 306 from another storage medium, such as storage device 310. Execution of the sequences of instructions contained in main memory 306 causes processor 304 to perform the process steps described herein. In alternative embodiments, hard-wired circuitry may be used in place of or in combination with software instructions.

The term "storage media" as used herein refers to any media that store data and/or instructions that cause a machine to operate in a specific fashion. Such storage media may comprise non-volatile media and/or volatile media. Non-volatile media includes, for example, optical or magnetic disks, such as storage device 310. Volatile media includes dynamic memory, such as main memory 306. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 302. Transmission media can also take the form of acoustic or light waves, such as those generated during radio-wave and infra-red data communications.

Various forms of media may be involved in carrying one or more sequences of one or more instructions to processor 304 for execution. For example, the instructions may initially be carried on a magnetic disk or solid state drive of a remote computer. The remote computer can load the instructions into its dynamic memory and send the instructions over a telephone line using a modem. A modem local to computer system 300 can receive the data on the telephone line and use an infra-red transmitter to convert the data to an infra-red signal. An infra-red detector can receive the data carried in the infra-red signal and appropriate circuitry can place the data on bus 302. Bus 302 carries the data to main memory 306, from which processor 304 retrieves and executes the instructions. The instructions received by main memory 306 may optionally be stored on storage device 310 either before or after execution by processor 304.

Computer system 300 also includes a communication interface 318 coupled to bus 302. Communication interface 318 provides a two-way data communication coupling to a network link 320 that is connected to a local network 322. For example, communication interface 318 may be an integrated services digital network (ISDN) card, cable modem, satellite modem, or a modem to provide a data communication connection to a corresponding type of telephone line. As another example, communication interface 318 may be a local area network (LAN) card to provide a data communication connection to a compatible LAN. Wireless links may also be implemented. In any such implementation, communication interface 318 sends and receives electrical, electromagnetic or optical signals that carry digital data streams representing various types of information.

Network link 320 typically provides data communication through one or more networks to other data devices. For example, network link 320 may provide a connection through local network 322 to a host computer 324 or to data equipment operated by an Internet Service Provider (ISP) 326. ISP 326 in turn provides data communication services through the world wide packet data communication network now commonly referred to as the "Internet" 328. Local network 322 and Internet 328 both use electrical, electromagnetic or optical signals that carry digital data streams. The signals through the various networks and the signals on network link 320 and through communication interface 318, which carry the digital data to and from computer system 300, are example forms of transmission media.

Computer system 300 can send messages and receive data, including program code, through the network(s), network link 320 and communication interface 318. In the Internet example, a server 330 might transmit a requested code for an application program through Internet 328, ISP 326, local network 322 and communication interface 318.

The received code may be executed by processor 304 as it is received, and/or stored in storage device 310, or other non-volatile storage for later execution.

In the foregoing specification, embodiments of the invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A method comprising:
a database management system (100) receiving a policy (143A - 143D) to associate with at least a database object in a database (120) managed by the database management system (100), the policy (143A - 143D) specifying an activity-level condition for triggering an archiving action on a stored representation of the database object, wherein the activity-level condition specifies a minimum period in which a particular state must be met, wherein the particular state comprises least one of (i) a low-access pattern on the database object, or (ii) write inactivity on the database object, or (iii) read inactivity on the database object, or (iv) read and write inactivity on the database object;
the database management system (100) determining, based at last in part on access statistics (160) of the database object calculated by a background policy evaluator (116), that the activity-level condition is satisfied for the database object;
in response to the determining that the activity-level condition is satisfied, the database management system (100) performing the archiving action on the stored representation of the database object;
wherein the method is performed by one or more computing devices.

2. The method of claim 1, wherein the policy (143A - 143D) further specifies a custom function defined by a user of the database (120), wherein the database management system (100) registers the custom function in the database (120) in response to receiving user input from the user requesting to register the custom function, and wherein the determining that the condition is satisfied for the database object is by evaluating the custom function to a particular result.

3. The method of claim 1, wherein the determining that the condition is satisfied for the database object is by one or more criteria.

4. The method of claim 3, wherein the one or more criteria include one or more costs of changing a current compression level of the database object to a target compression level specified by the policy (143A - 143D).

5. The method of claim 3, wherein the one or more criteria include at least one of: a number of row accesses on the database object, a number of data manipulation language (DML) statements on the database object, a number of table scans on the database object, or a number of index lookups on the database object.

6. The method of claim 1, wherein the particular state is a low-access pattern, and wherein the determining that the activity-level condition is satisfied comprises determining whether an access metric falls under a certain threshold.

7. The method of claim 6, wherein the metric is based on access statistics (160), wherein each type of access in the access statistics (160) is given a particular weight in the metric, reflecting the cost of performing that particular access.

8. The method of any of claims 1-7, wherein the determining that the activity-level condition is satisfied for the database object uses a segment level or block level heatmap of the database (120).

9. The method of any of claims 1-7, wherein the activity-level condition is specified for rows (136A, 136B) of the database object, and wherein the task specifies the archiving action for the rows (136A, 136B) of the database object satisfying the activity-level condition.

10. The method of any of claims 1-9, wherein, prior to performing the archiving action, the archiving action is consolidated with another archiving action also on the stored representation of the database object so that multiple tasks are combined into a single operation.

11. The method of any of claims 1-10, wherein the archiving action comprises moving the stored representation of the database object to a target storage structure.

12. The method of any of claims 1-11, wherein the archiving action comprises compressing the stored representation of the database object to a target compression level specified by the policy (143A - 143D).

13. The method of claim 1, wherein the stored representation of the database object is in a tablespace (130A), wherein the activity-level condition comprises the tablespace (130A) exceeding a fullness threshold, and wherein the archiving action comprises moving a least active portion of the tablespace (130A) to a target tablespace (130B) such that the tablespace (130A) falls below the fullness threshold.

14. An apparatus comprising one or more devices configured to perform a method as recited in any of claims 1-13.

15. A computer-readable storage medium comprising instructions, which when executed by one or more processors, cause performance of a method as recited in any of claims 1-13.

## Patentansprüche

1. Verfahren, das umfasst:
ein Datenbankverwaltungssystem (100) empfängt eine Richtlinie (143A - 143D), die mindestens einem Datenbankobjekt in einer durch das Datenbankverwaltungssystem (100) verwalteten Datenbank (120) zugeordnet werden soll, wobei die Richtlinie (143A - 143D) eine Aktivitätsgradbedingung zum Auslösen einer Archivierungsaktion bezüglich einer gespeicherten Darstellung des Datenbankobjekts angibt, wobei die Aktivitätsgradbedingung eine Mindestzeitdauer angibt, während der ein bestimmter Zustand erfüllt sein muss, wobei der bestimmte Zustand mindestens (i) ein Geringzugriffsmuster bezüglich des Datenbankobjekts und/oder (ii) Schreibinaktivität bezüglich des Datenbankobjekts und/oder (iii) Leseinaktivität bezüglich des Datenbankobjekts und/oder (iv) Lese- und Schreibinaktivität bezüglich des Datenbankobjekts umfasst;
wobei das Datenbankverwaltungssystem (100), zumindest zum Teil beruhend auf Zugriffsstatistiken (160) bezüglich des Datenbankobjekts, die von einem Hintergrund-Richtlinienauswerter (116) berechnet wurden, bestimmt, dass die Aktivitätsgradbedingung für das Datenbankobjekt erfüllt ist;
ansprechend auf die Bestimmung, dass die Aktivitätsgradbedingung erfüllt ist, führt das Datenbankverwaltungssystem (100) die Archivierungsaktion bezüglich der gespeicherten Darstellung des Datenbankobjekts aus;
wobei das Verfahren von einer Recheneinrichtung oder mehreren Recheneinrichtungen ausgeführt wird.

2. Verfahren nach Anspruch 1, bei dem die Richtlinie (143A - 143D) ferner eine benutzerdefinierte Funktion angibt, die von einem Benutzer der Datenbank (120) definiert wird, wobei das Datenbankverwaltungssystem (100) die benutzerdefinierte Funktion in der Datenbank (120) ansprechend auf den Empfang einer Benutzereingabe von dem Benutzer, durch die eine Registrierung der benutzerdefinierten Funktion angefordert wird, registriert, und wobei die Bestimmung, dass die Bedingung bezüglich des Datenbankobjekts erfüllt ist, erfolgt, indem die benutzerdefinierten Funktion mit einem bestimmten Ergebnis ausgewertet wird.

3. Verfahren nach Anspruch 1, bei dem die Bestimmung, dass die Bedingung bezüglich des Datenbankobjekts erfüllt ist, gemäß einem Kriterium oder mehreren Kriterien erfolgt.

4. Verfahren nach Anspruch 3, bei dem das eine Kriterium oder die mehreren Kriterien ein oder mehrere Kostenwerte für eine Änderung einer aktuellen Kompressionsstufe des Datenbankobjekts auf eine durch die Richtlinie (143A - 143D) angegebene Zielkompressionsstufe umfasst/umfassen.

5. Verfahren nach Anspruch 3, bei dem das eine Kriterium oder die mehreren Kriterien mindestens eines der folgenden Kriterien umfassen: eine Anzahl von Zeilenzugriffen auf das Datenbankobjekt, eine Anzahl von Datenmanipulationssprachen-(DML)-Anweisungen bezüglich des Datenbankobjekts, eine Anzahl von Tabellendurchsuchungen bezüglich des Datenbankobjekts, oder eine Anzahl von Index-Nachschlagevorgängen bezüglich des Datenbankobjekts.

6. Verfahren nach Anspruch 1, bei dem der bestimmte Zustand ein Geringzugriffsmuster ist, und bei dem die Bestimmung, dass die Aktivitätsgradbedingung erfüllt ist, eine Bestimmung umfasst, ob eine Zugriffsmetrik unter einen bestimmten Schwellenwert fällt.

7. Verfahren nach Anspruch 6, bei dem die Metrik auf Zugriffsstatistiken (160) beruht, wobei jeder Zugriffsart in den Zugriffsstatistiken (160) ein bestimmtes Gewicht in der Metrik zugewiesen wird, das die Kosten einer Ausführung dieses bestimmten Zugriffs widerspiegelt.

8. Verfahren nach einem der Ansprüche 1-7, bei dem die Bestimmung, dass die Aktivitätsgradbedingung bezüglich des Datenbankobjekts erfüllt ist, eine Wärmekarte (Heatmap) der Datenbank (120) auf Segmentebene oder Blockebene verwendet.

9. Verfahren nach einem der Ansprüche 1-7, bei dem die Aktivitätsgradbedingung für Zeilen (136A, 136B) des Datenbankobjekts angegeben wird, und bei dem die Aufgabe die Archivierungsaktion für die Zeilen (136A, 136B) des Datenbankobjekts, die die Aktivitätsgradbedingung erfüllen, angibt.

10. Verfahren nach einem der Ansprüche 1-9, bei dem, vor Durchführung der Archivierungsaktion, die Archivierungsaktion mit einer anderen Archivierungsaktion, die auch die gespeicherte Darstellung des Datenbankobjekts betrifft, konsolidiert wird, so dass mehrere Aufgaben zu einer einzigen Operation kombiniert werden.

11. Verfahren nach einem der Ansprüche 1-10, bei dem die Archivierungsaktion ein Verschieben der gespeicherten Darstellung des Datenbankobjekts in eine Ziel-Speicherstruktur umfasst.

12. Verfahren nach einem der Ansprüche 1-11, bei dem die Archivierungsaktion ein Komprimieren der gespeicherten Darstellung des Datenbankobjekts auf eine durch die Richtlinie (143A - 143D) angegebene Zielkomprimierungsstufe umfasst.

13. Verfahren nach Anspruch 1, bei dem sich die gespeicherte Darstellung des Datenbankobjekts in einem Tabellenraum (Tablespace) (130A) befindet, wobei die Aktivitätsgradbedingung umfasst, dass der Tabellenraum (130A) einen Füllungsgrad-Schwellenwert überschreitet, und wobei die Archivierungsaktion ein Verschieben eines am wenigsten aktiven Teils des Tabellenraums (130A) in einen Ziel-Tabellenraum (130B) umfasst, so dass der Tabellenraum (130A) unter den Füllungsgrad-Schwellenwert fällt.

14. Vorrichtung, die eine oder mehrere Einrichtungen umfasst, die dazu konfiguriert sind, ein Verfahren nach einem der Ansprüche 1-13 auszuführen.

15. Computerlesbares Speichermedium mit Befehlen, die, wenn sie von einem Prozessor oder mehreren Prozessoren ausgeführt werden, bewirken, dass ein Verfahren nach einem der Ansprüche 1-13 ausgeführt wird.

## Revendications

1. Procédé comprenant :
un système de gestion de base de données (100) recevant une politique (143A - 143D) à associer à au moins un objet de base de données dans une base de données (120) gérée par le système de gestion de base de données (100), la politique (143A - 143D) spécifiant une condition de niveau d'activité pour déclencher une action d'archivage sur une représentation stockée de l'objet de base de données, la condition de niveau d'activité spécifiant une période minimale dans laquelle un état particulier doit être satisfait, l'état particulier comprenant au moins l'un parmi (i) un motif de faible accès sur l'objet de base de données, ou (ii) une inactivité d'écriture sur l'objet de base de données, ou (iii) une inactivité de lecture sur l'objet de base de données, ou (iv) une inactivité d'écriture et de lecture sur l'objet de base de données ;
le système de gestion de base de données (100) déterminant, sur la base au moins en partie de statistiques d'accès (160) de l'objet de base de données calculées par un évaluateur de politique d'arrière-plan (116), que la condition de niveau d'activité est satisfaite pour l'objet de base de données ;
en réponse à la détermination du fait que la condition de niveau d'activité est satisfaite, le système de gestion de base de données (100) réalisant l'action d'archivage sur la représentation stockée de l'objet de base de données ;
le procédé étant réalisé par un ou plusieurs dispositifs informatiques.

2. Procédé selon la revendication 1, dans lequel la politique (143A - 143D) spécifie en outre une fonction personnalisée définie par un utilisateur de la base de données (120), dans lequel le système de gestion de base de données (100) enregistre la fonction personnalisée dans la base de données (120) en réponse à la réception d'une entrée d'utilisateur à partir de l'utilisateur demandant d'enregistrer la fonction personnalisée, et dans lequel la détermination du fait que la condition est satisfaite pour l'objet de base de données est par évaluation de la fonction personnalisée à un résultat particulier.

3. Procédé selon la revendication 1, dans lequel la détermination du fait que la condition est satisfaite pour l'objet de base de données est par un ou plusieurs critères.

4. Procédé selon la revendication 3, dans lequel le ou les critères comprennent un ou plusieurs coûts de changement d'un niveau de compression actuel de l'objet de base de données en un niveau de compression cible spécifié par la politique (143A - 143D).

5. Procédé selon la revendication 3, dans lequel le ou les critères comprennent au moins l'un parmi : un nombre d'accès de rangée sur l'objet de base de données, un nombre d'instructions en langage de manipulation de données (DML) sur l'objet de base de données, un nombre de balayages de table sur l'objet de base de données, ou un nombre de recherches d'index sur l'objet de base de données.

6. Procédé selon la revendication 1, dans lequel l'état particulier est un motif de faible accès, et dans lequel la détermination du fait que la condition de niveau d'activité est satisfaite comprend la détermination du point de savoir si une mesure d'accès tombe ou non sous un certain seuil.

7. Procédé selon la revendication 6, dans lequel la mesure est basée sur des statistiques d'accès (160), chaque type d'accès dans les statistiques d'accès (160) étant donné avec un poids particulier dans la mesure, reflétant le coût de réalisation de cet accès particulier.

8. Procédé selon l'une quelconque des revendications 1 à 7, dans lequel la détermination du fait que la condition de niveau d'activité est satisfaite pour l'objet de base de données utilise une carte de chaleur niveau segment ou niveau bloc de la base de données (120).

9. Procédé selon l'une quelconque des revendications 1 à 7, dans lequel la condition de niveau d'activité est spécifiée pour des rangées (136A, 136B) de l'objet de base de données, et dans lequel la tâche spécifie l'action d'archivage pour les rangées (136A, 136B) de l'objet de base de données satisfaisant la condition de niveau d'activité.

10. Procédé selon l'une quelconque des revendications 1 à 9, dans lequel, avant la réalisation de l'action d'archivage, l'action d'archivage est consolidée avec une autre action d'archivage également sur la représentation stockée de l'objet de base de données de telle sorte que de multiples tâches sont combinées en une unique opération.

11. Procédé selon l'une quelconque des revendications 1 à 10, dans lequel l'action d'archivage comprend le déplacement de la représentation stockée de l'objet de base de données vers une structure de stockage cible.

12. Procédé selon l'une quelconque des revendications 1 à 11, dans lequel l'action d'archivage comprend la compression de la représentation stockée de l'objet de base de données à un niveau de compression cible spécifié par la politique (143A - 143D).

13. Procédé selon la revendication 1, dans lequel la représentation stockée de l'objet de base de données est dans un ensemble de tables (130A), dans lequel la condition de niveau d'activité comprend l'ensemble de tables (130A) dépassant un seuil de plénitude, et dans lequel l'action d'archivage comprend le déplacement d'une partie moins active de l'ensemble de tables (130A) vers un ensemble de tables cible (130B) de telle sorte que l'ensemble de tables (130A) tombe sous le seuil de plénitude.

14. Appareil comprenant un ou plusieurs dispositifs configurés pour réaliser un procédé tel que décrit à l'une quelconque des revendications 1 à 13.

15. Support de stockage lisible par ordinateur comprenant des instructions qui, lorsqu'elles sont exécutées par un ou plusieurs processeurs, entraînent la réalisation d'un procédé tel que décrit à l'une quelconque des revendications 1 à 13.
